# FASCICULE DE BREVET EUROPEEN

(11) **EP 0 354 147 B1**
(45) Date de publication et mention de la délivrance du brevet: **19.05.1993**
(21) Numéro de dépôt: 89420293.6
(22) Date de dépôt: 02.08.1989
(51) Int. Cl.: G01G 19/415, G01G 21/28, G01G 23/12

(54) **Dispositif antifraude pour une balance**
Vorrichtung zur Vehinderung von Betrug bei einer Waage
Antifraud apparatus for a balance

(30) Priorité: 03.08.1988 FR 8810765
(43) Date de publication de la demande: 07.02.1990
(73) Titulaire: Mathian, Louis, F-38320 Eybens (FR)
(72) Inventeur: Mathian, Louis, F-38320 Eybens (FR)

(56) Documents cités:
- EP-A- 0 087 310
- EP-A- 0 282 400
- EP-A- 0 314 889
- DE-A- 2 818 024
- FR-A- 1 141 811
- FR-A- 2 577 041
- US-A- 4 706 298

## Description

L'invention est relative à un dispositif de pesée selon le préambule de la revendication 1.

Le document EP-A-282400, publié après la date de la présente demande, décrit un dispositif du genre mentionné, dans lequel les risques de fraude sont réduits, mais non absolument exclus. Le sac est fermé par une bande entourant le col, qui est soit collée soit soudée, et il est possible d'enlever cette bande sans détériorer le sac et de la remplacer par la suite. Ce document ne peut être retenu pour l'appréciation de l'activité inventive.

Le document EP-A-87310 concerne également une balance self service, dans laquelle le sac est scellé par une bande auto-adhésive placée autour du col du sac. Il est précisé que le scellement peut être réalisé par d'autres moyens, notamment par un scellement à chaud, mais aucun moyen particulier n'est décrit, notamment pour empêcher l'ouverture ultérieure du sac.

Le document US-A-4.706.298 est relatif à un dispositif de scellement d'un sac en matière plastique par soudage par des pointes chaudes.

La présente invention a pour but de réaliser une balance de pesée en libre-service empêchant tout arrachage de l'étiquette de pesée ou toute ouverture ultérieure du sac sans détérioration de ce dernier et ce but est atteint par la mise en oeuvre des caractéristiques de la revendication 1.

En suspendant le sac à l'équipage mobile de la balance et en prévoyant un volume de protection enveloppant la partie sensible de la balance et le sac lui-même, on évite toute intervention de l'utilisateur pendant la phase de pesée qui ne peut être réalisée que lorsque la protection à l'intérieur de ce volume est assurée. Le cycle de pesée comporte également le scellement du sac et l'impression, et la fixation d'une étiquette de pesée,
empêchant toute modification du contenu du sac ou de l'indication du résultat de la pesée après cette dernière.

Le scellement du sac doit être fiable et toute infraction doit être facilement perceptible au moment du passage à la caisse. Selon un développement important de l'invention, le scellement est réalisé par un soudage par points au moyen de tiges ou pointes chauffées à une température supérieure à la température de fusion de la matière plastique constitutive du col du sac. Les tiges chaudes sont appliquées sur le col du sac et elles traversent les différentes couches de matière plastique en provoquant une fusion localisée et une perforation de la matière plastique. Les tiges de soudage sont réparties sur une surface suffisante pour contenir l'ensemble du col resserré du sac, et la fermeture ou le scellement par points est suffisant pour empêcher toute introduction de marchandises dans le sac scellé. Le scellement peut comporter l'application d'une bande de scellement en matière plastique qui lors du soudage est appliquée contre le col du sachet et est traversée et soudée par points par les tiges chauffantes. La bande de scellement peut être en une matière plastique appropriée, telle que le polyéthylène, et elle est avantageusement insérée entre le col du sac et l'une des mâchoires de préhension de ce col. Cette mâchoire constitue le support des tiges chauffantes qui sont montées à coulissement transversalement de manière à s'appliquer sous l'action d'un vérin contre le col du sac et à venir après perforation du col en butée sur la mâchoire opposée, revêtue avantageusement d'une couche de polytétrafluoréthylène. La bande de scellement peut être du type composite, et comporter par emplacement une couche de papier ou d'un autre matériau, susceptible de recevoir une impression des données caractéristiques de la pesée. La bande de scellement est amenée entre les mâchoires du dispositif de pression par tout moyen approprié, notamment par une roue crantée faisant avancer la bande après chaque cycle de pesée. Le soudage par pointes chaudes est approprié à des matières plastiques de différentes épaisseurs, et il permet une solidarisation de plusieurs couches superposées du col du sachet. Les tiges ou pointes sont chauffées avantageusement électriquement par tout moyen approprié, et un dispositif de régulation limite leur température d'une manière bien connue des spécialistes.

Le volume de protection peut être confiné par une paroi solide, tel qu'un écran dont une partie peut être amovible ou effaçable, pour permettre l'insertion du sac dans le volume, mais d'autres modes de réalisation de ce volume sont concevables, par exemple par des parois immatérielles, du type à voyant lumineux ou infrarouge, ou éventuellement par des systèmes composites partiellement à écran mécanique, et dans des zones d'accès à écran immatériel. Le moyen de protection est bien entendu adapté au type de paroi du volume de protection, et une pénétration ou une présence inopportune est détectée par des moyens appropriés.

La fiabilité de la pesée est avantageusement améliorée en empêchant tout balancement du sac pendant la pesée, ce balancement pouvant être empêché en prévoyant des butées d'appui du sac, qui sont solidaires de l'équipage mobile de la balance pour ne pas influencer la pesée. Il est également possible de freiner ou d'amortir les oscillations du sac, par une surface de retenue fixe qui est effaçable ou rétractable après immobilisation du sac pour permettre l'opération de pesée pendant que le sac est suspendu librement au plateau de la balance. La surface de freinage peut être un plateau disposé sous le sac et amené temporairement au voisinage du fond de ce dernier. L'effacement de cette surface de freinage doit être progressive et suffisamment lente pour ne pas engendrer de nouvelles oscillations susceptibles d'influencer la pesée.

Les dispositifs élaborés comportent des touches de sélection permettant l'indication de la marchandise contenue dans le sac et/ou d'autres informations susceptibles de figurer sur l'étiquette de pesée, et un risque de fraude consistant à actionner des touches ne correspondant pas à la marchandise pesée, peut être réduit en permettant l'actionnement de ces touches qu'après introduction du sac dans le volume de protection, ce qui permet une supervision et un contrôle plus efficace. L'accès aux touches de sélection ou leur blocage mécanique ou électrique peut être réalisé de différentes manières, et une manière simple consiste à obturer l'accès aux touches de sélection par un écran ne s'effaçant que lors de la fermeture du volume de protection, par exemple lors de la mise en place d'un écran ou capot de fermeture de ce volume. Le blocage des touches de sélection peut également être électrique, empêchant toute introduction de données tant que le volume de protection n'est pas protégé.

La pesée peut également être faussée en faisant reposer partiellement le fond du sac sur la base du dispositif de cette fraude peut être évitée par utilisation de sacs standards d'une dimension empêchant toute mise en place du sac entre les mâchoires de préhension, tant que le sac repose sur la base. Dans le cas de sacs de différentes dimensions, fréquemment nécessaires pour la pesée de différents produits ou quantités de produits, le sac pesé de petite dimension est écarté de la base d'une hauteur importante, susceptible d'endommager la marchandise lors de la tombée sur la base. Un moyen préférentiel pour éviter cette chute brutale des sacs consiste à prévoir un plateau de réception du sac libéré en fin du cycle de pesée, qui est mobile pour pouvoir être monté à proximité ou au contact du sac avant sa libération. Pendant la pesée, le plateau de réception doit bien entendu être abaissé suffisamment pour éviter tout contact du sac. La hauteur de déplacement du plateau peut être fixe, mais elle peut également être déterminée par des détecteurs de venue en contact du sac, qui contribuent à la sûreté de la pesée et à éviter les fraudes.

Le cycle de pesée est avantageusement entièrement automatisé, toute fausse opération bloquant le déroulement normal du cycle, et empêchant le scellement et la fixation de l'étiquette sur le sac. Toute fraude pendant l'opération de pesée est exclue et après reprise du sac scellé muni de l'étiquette, il est pratiquement impossible à l'utilisateur de changer, soit la marchandise contenue dans le sac, soit l'étiquette sans laisser des traces apparentes facilement détectées par la caissière.

D'autres avantages et caractéristiques ressortiront plus clairement de la description qui va suivre d'un mode de mise en oeuvre de l'invention donné à titre d'exemple non limitatif et représenté aux dessins annexés dans lesquels:

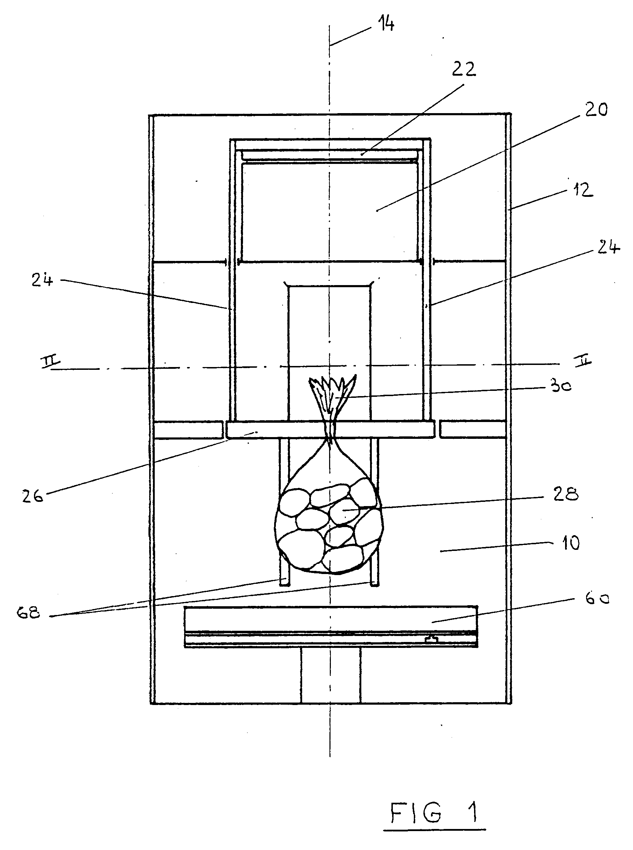

- la figure 1 est une vue schématique en élévation d'un dispositif de pesée anti fraude selon l'invention;
- la figure 2 est une coupe à échelle agrandie suivant la ligne II-II de la figure 1;
- la figure 3 est une coupe suivant la ligne III-III de la figure 2;
- la figure 4 est une vue de la bande de scellement du col du sac selon la figure 3, munie de l'étiquette de pesée;

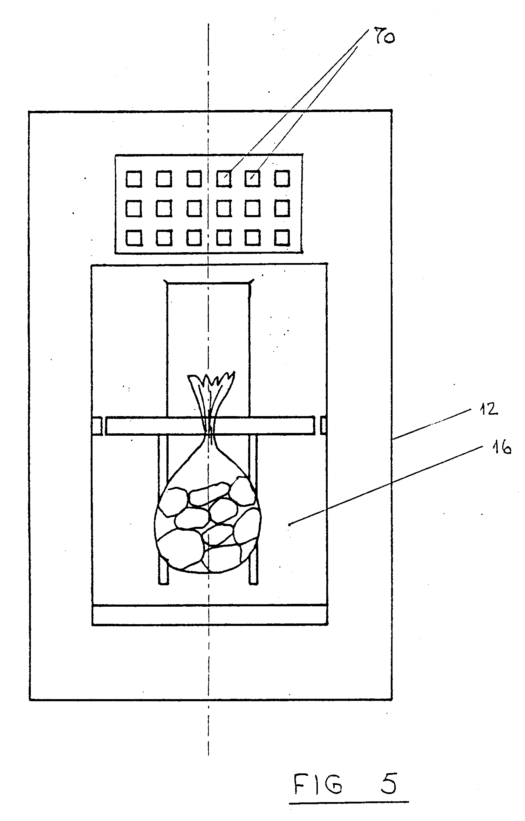

- la figure 5 est une vue schématique analogue à celle de la figure 1 montrant les touches de sélection.

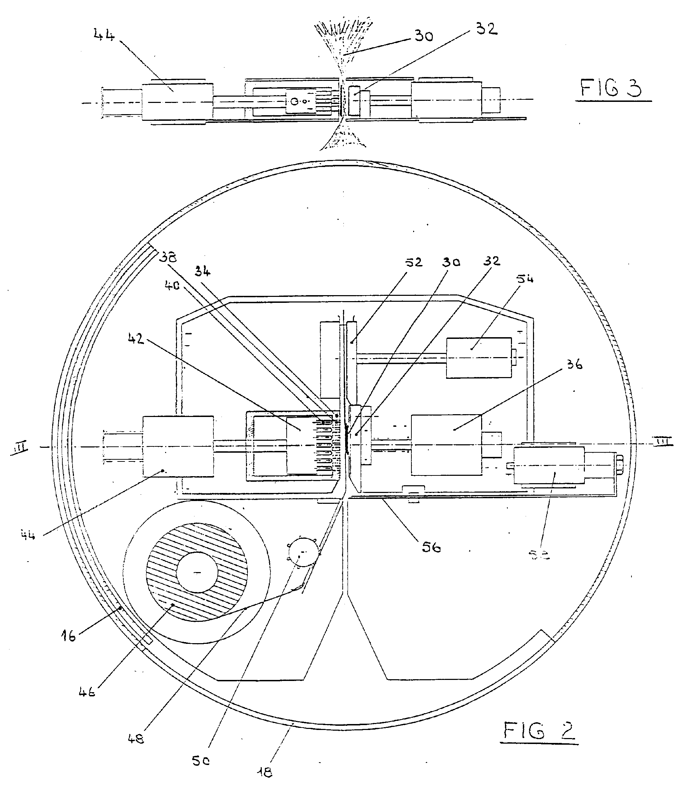

Sur les figures, un dispositif de pesée du type self-service est disposé dans un volume de protection 10, confiné par une paroi cylindrique 12, d'axe vertical 14, dont un secteur 16 est monté à pivotement pour dégager une ouverture d'accès 18, ou pour inversement obturer cette ouverture 18 pour clore le volume de protection 10. La forme des parois 12 et du secteur 16 formant le capot d'obturation peut bien entendu être différente, et ces parois 12,16 peuvent être constituées en partie ou totalement d'une manière différente, par exemple immatérielles, par des faisceaux lumineux ou infrarouges ou tout autre système d'écran. Dans le volume de protection 10 est logé une balance 20 dont le plateau 22 porte par l'intermédiaire de tirants 24, un équipage ou plateau mobile 26 de fixation d'un sac 28. Le sac 28 contient la marchandise à peser, et il est avantageusement en matière plastique transparente, permettant l'inspection du contenu du sac. Le col 30 du sac 28 est resserré et inséré entre deux mâchoires 32,34 de préhension, dont l'une 32 est mobile transversalement sous l'action d'un vérin ou d'un électro-aimant 36. La mâchoire opposée fixe 34 présente une pluralité de trous 38, de passage de pointes ou tiges 40 de soudage portées par un coulisseau 42, permettant un déplacement transversal sur la figure 2,des pointes 40 en direction de la mâchoire opposée 32, en traversant le col enserré 30 du sac 28. Le coulisseau 42 est actionné par un vérin ou électro-aimant 44 et il comporte des résistances de chauffage (non représentées) permettant de porter les pointes 40 à une température prédéterminée suffisante à la fusion de la matière plastique constitutive du sac 28. Le plateau support 26 porte un rouleau 46 d'une bande de scellement 48 en matière plastique, notamment en polyéthylène, qui coopère avec une roue crantée d'entraînement 50, déplaçant la bande 48 entre les mâchoires 32,34 en position ouverte de celles-ci. La bande 48 dont la constitution sera décrite par la suite, est prolongée au delà des mâchoires 32,34 pour coopérer avec un dispositif d'impression 52, actionné par un électro-aimant 54. Une cisaille 56 en forme de couteau coulissant, actionnée par un électro-aimant 58, assure le sectionnement de la bande 48 après sa mise en place entre les mâchoires 32,34. Le dispositif fonctionne de la manière suivante :

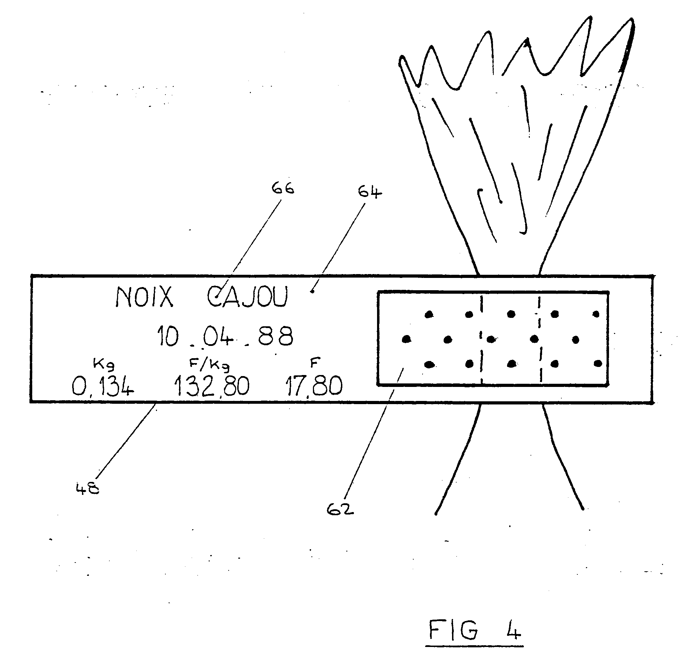

En position de repos, le capot 16 est ouvert et les mâchoires 32,34 sont écartées, une portion de la bande 48 étant insérée entre ces mâchoires. Le client désirant peser un sac 28 rempli de marchandises, resserre le col 30 pour l'introduire entre les mâchoires 32,34, dont la fermeture par l'électro-aimant 36 est commandé par tout moyen approprié détectant la mise en place d'un sac 28, par exemple par l'actionnement d'un microcontact disposé en fond des mâchoires 32,34. Le sac 28 maintenu par les mâchoires 32,34 peut être lâché et l'utilisateur ferme le capot 16 pour déclencher le cycle de pesée. Ce déclenchement peut être automatique ou réalisé par une commande quelconque, par exemple l'enfoncement d'une touche non représentée. Le sac 28 est porté par l'intermédiaire des tirants 24 par le plateau 22 de la balance 20, et cette dernière effectue la pesée. Le poids correspondant est imprimé sur la bande 48 par l'imprimante 52. Préalablement ou postérieurement à cette impression, la cisaille 56 découpe la partie déroulée de la bande 48, insérée entre les mâchoires 32,34, et cette bande, appliquée contre le col 30 du sac 28, est perforée par les pointes chaudes 40, déplacées transversalement par l'électro-aimant de soudure 44. Les pointes chaudes traversent la bande 48 et la matière plastique du col 30 en les perforant et en provoquant un scellement par soudage par points. La mâchoire 32 opposée aux pointes de soudage 40 porte un revêtement en polytétrafluoréthylène ou en tout autre matériau approprié, évitant un collage du col 30 ou un endommagement des pointes 40. L'opération de scellement peut être effectuée avant ou après la pesée, ou simultanément à cette dernière et en fin de cycle, les mâchoires 32,34 s'écartent sous l'action de l'électro-aimant de suspension 36, pour libérer le sac 28 qui tombe sur un plateau inférieur 60. Sur la figure 3 on voit que les pointes de soudage 40 sont disposées sur trois rangs superposés, le nombre pouvant bien entendu être supérieur ou inférieur selon l'efficacité de la soudure recherchée. Chaque rang comporte un certain nombre de pointes de soudure 40, par exemple 7 pointes dans l'exemple illustré par la figure 2, les pointes pouvant être imbriquées pour une meilleure répartition des points de soudage. La largeur de chaque rang est suffisante pour souder l'ensemble du col resserré 30 du sachet 28, et empêcher après scellement toute introduction ou sortie de marchandises du sac scellé 28. Le soudage par perforation permet la fixation simultanée de la bande 48, et un soudage en épaisseur sur plusieurs couches superposées du col resserré 30. La soudure est efficace quelle que soit l'épaisseur de la matière plastique, celle-ci étant toujours traversée par les pointes chauffantes qui engendrent une fusion et un soudage de la matière plastique sur leur périphérie.

En se référant plus particulièrement à la figure 4, on voit que la bande 48 du type composite comprend une partie 62 en matière plastique, correspondant à la zone de soudage par les pointes de soudure 40. L'autre partie de la bande 48 porte une couche de papier 64 formant étiquette et permettant l'impression des données de pesée 66. Selon le type d'imprimante 52 utilisé, la bande 48 peut comporter uniquement de la matière plastique, la bande composite présentant l'avantage d'une séparation des fonctions de soudage et des fonctions d'impression. Il est clair que l'invention est applicable à un dispositif de pesée dépourvu d'une bande de scellement 48 et d'une étiquette 64, les caractéristiques de la marchandise et/ou les données de la pesée étant reportées ou visualisées d'une manière différente.

Pendant la pesée, le sac 28 est écarté du plateau de fond 60 et deux tiges 68 ou tout autre surface de butée solidaire du plateau de pesée 26, retiennent le sac 28 pour éviter tout balancement.

Les tiges 68 ou la butée peuvent également être fixes, mais dans ce cas elles doivent être écartées du sac 28 pendant l'opération de pesée. Le balancement du sac 28 peut également être évité en rapprochant le plateau de fond 60 du sac 28 de manière à freîner le balancement éventuel du sac. Pendant l'opération de pesée, le plateau 60 devra être abaissé pour libérer le sac 28. La montée et la descente du plateau de fond 60 peut être réalisée par tout moyen approprié, notamment par un vérin pneumatique ou électrique, les mouvements devant être lents pour éviter toute action brusque sur le sac 28, susceptible d'engendrer des balancements de ce dernier.

Le plateau de fond 60 sur lequel le sac 28 tombe lors de sa libération à la fin du cycle de pesée, porte avantageusement un revêtement, amortissant la chute du sac 28. Pour éviter une hauteur de chute trop importante et permettre l'utilisation de sacs de dimensions différentes, le plateau 60 peut être mobile verticalement afin de le rapprocher du sac 28 au moment de la libération de ce dernier. L'abaissement du plateau de fond 60 engendre un espace de protection sous le sac 28 et il est possible de prévoir un détecteur signalant tout contact, notamment du fond du sac 28 avec le plateau 60. Le cycle de montée et de descente du plateau de fond 60 appartient bien entendu au cycle total de pesée et l'ensemble est automatisé pour éviter toute fausse manoeuvre.

Dans un mode de mise en oeuvre préférentiel, l'étiquette 48 porte en plus de l'indication du poids, celle du type de marchandises avec le prix au kilo et celui de la marchandise pesée. Le dispositif de pesée comporte à cet effet, des touches 70 de sélection qui sont actionnées par l'utilisateur pour introduire ces données additionelles. Afin d'éviter toute erreur intentionnelle ou non, il est avantageux d'introduire ces données par actionnement d'une touche 70 lorsque le sac 28 est déjà disposé dans le volume de protection, entre les mâchoires 32,34. L'utilisateur voit dans ce cas la marchandise prête à être pesée, et ne peut pas se tromper. Le blocage des touches de sélection 70 ou plus exactement leur libération après la mise en place du sac 28, peut être réalisé de différentes manières, par exemple en disposant les touches 70 derrière une fenêtre de la paroi 12. Cette fenêtre est normalement obturée, empêchant tout actionnement des touches 70, mais elle est ouverte par déplacement d'un cache, par exemple solidaire du capot 16 lorsque celui-ci vient en position de fermeture. Les touches 70 sont ainsi accessibles uniquement lorsque le volume de protection est protégé. La libération du cache des touches 70 peut également être commandée électriquement par le programmateur du cycle de pesée. Il est possible de bloquer les touches de sélection 70 électriquement par un système de relais bien connu des spécialistes.

Il est clair que le dispositif de pesée selon l'invention ne comporte pas obligatoirement toutes les particularités susmentionnées, l'amortisseur de chute du sac 28 sur le plateau de récupération 60 pouvant être supprimé, ou certaines de ces particularités pouvant être utilisées en combinaison avec des dispositifs équivalents. Les possibilités de fraude sont notablement réduites et un éventuel contrôle est simplifié.

## Revendications

1. Dispositif de pesée pour une pesée en libre-service de marchandises mises dans un sac (28) et inaccessibles après la pesée, comprenant un dispositif de préhension (32, 34) du col (30) du sac solidaire de l'équipage mobile (22, 26) de la balance, un volume (10) confinant ledit équipage mobile (22, 26), le dispositif de préhension (32, 34) et le sac (28) suspendu à ce dernier et un cycle d'opérations comprenant la pesée, l'impression d'une étiquette (48) de pesée et le scellement du sac, caractérisé en ce que le scellement du sac en matière plastique est réalisé par un soudage par points du col (30) enserré entre des mâchoires (32, 34) dudit dispositif de préhension et que le soudage par points dudit col enserré effectue simultanément la fixation par soudage de l'étiquette de pesée (48).

2. Dispositif selon la revendication 1, caractérisé en ce que l'étiquette (48) de pesée comporte une bande en matière plastique intercalée entre l'une (34) des mâchoires (32, 34) de préhension et le col (30) enserré du sac.

3. Dispositif selon la revendication 1 ou 2, caractérisé en ce que le dispositif de scellement comporte plusieurs pointes (40) chauffées à une température suffisante à une fusion superficielle de la matière plastique du col (30) du sac, que lesdites pointes traversent à coulissement des orifices (38) ménagés dans l'une (34) desdites mâchoires (32, 34), et que lesdites pointes sont déplacées transversalement pour traverser les différentes épaisseurs et/ou couches superposées pour provoquer la fusion de la matière plastique du col du sac et de l'étiquette (48).

4. Dispositif selon la revendication 1, 2 ou 3, caractérisé en ce que l'étiquette en forme de bande (48) comporte une partie (62) en matière plastique appliquée et soudée au col du sac, et une partie (64) permettant l'impression des données de la pesée (66).

5. Dispositif selon l'une quelconque des revendications précédentes, caractérisé en ce que les pointes (40) de scellement en forme de tiges sont montées à coulissement dans une mâchoire (34) de serrage du col (30) du sac, la mâchoire (32) opposée portant un revêtement de polytétrafluoréthylène ou d'une matériau équivalent, sur lequel les pointes (40) viennent buter.

6. Dispositif selon l'une quelconque des revendications précédentes, caractérisé en ce qu'il comprend des moyens (68) de limitation du balancement du sac (28) suspendu au dispositif de préhension (32,34), afin de ne pas fausser la pesée.

7. Dispositif selon la revendication 6, caractérisé en ce que lesdits moyens de limitation du balancement comportent des surfaces (68) de butée solidaires de l'équipage mobile de la balance.

8. Dispositif selon la revendication 6, caractérisé en ce que lesdits moyens de limitation du balancement comportent des surfaces fixes (60) d'amortissement du balancement, qui sont effaçables pendant l'opération de pesée.

9. Dispositif selon l'une quelconque des revendications précédentes, caractérisé en ce qu'il comporte un plateau (60) de réception du sac (28) libéré en fin de cycle de pesée, disposé sous le sac et susceptible d'être monté et abaissé pour limiter ou annuler la hauteur de chute du sac sans interférer avec la pesée.

10. Dispositif selon l'une quelconque des revendications précédentes, ayant des touches (70) de sélection, notamment du type de marchandises contenues dans le sac, caractérisé en ce que l'actionnement desdites touches n'est pas possible que lorsque la protection dudit volume (10) est assurée.

## Claims

1. A weighing device for self-service weighing of goods placed in a bag (28) and inaccessible after weighing, comprising a clamping device (32, 34) of the neck (30) of the bag fixedly secured to the mobile assembly (22, 26) of the scales, a volume (10) confining said movable assembly (22, 26), the clamping device (32, 34) and the bag (28) suspended on the latter and a cycle of operations comprising weighing, printing of a weighing label (48) and sealing of the bag, characterised in that sealing of the bag made of plastic material is achieved by spot welding of the neck (30) clamped between jaws (32, 34) of said clamping device and that spot welding of said clamped neck simultaneously achieves fixing of the weighing label (48) by welding.

2. The device according to claim 1, characterised in that the weighing label (48) comprises a strip of plastic material inserted between one (34) of the clamping jaws (32, 34) and the clamped neck (30) of the bag.

3. The device according to claim 1 or 2, characterised in that the sealing device comprises several prongs (40) heated to a temperature sufficient for superficial melting of the plastic material of the neck (30) of the bag, that said prongs pass with sliding through orifices (38) arranged in one (34) of said jaws (32, 34), and that said prongs are moved transversely to transpierce the different superposed thicknesses and/or layers to bring about melting of the plastic material of the neck of the bag and of the label (48).

4. The device according to claim 1, 2 or 3, characterised in that the label (48) comprises a part (62) made of plastic material applied and welded to the neck of the bag, and a part (64) enabling the weighing data (66) to be printed.

5. The device according to any one of the above-mentioned claims, characterised in that the sealing prongs (40) in the form of rods are mounted with sliding in a clamping jaw (34) of the neck (30) of the bag, the opposite jaw (32) bearing a coating of polytetrafluorethylene or an equivalent material, against which the prongs (40) are stopped.

6. The device according to any one of the above-mentioned claims, characterised in that it comprises means (68) for limiting the rocking of the bag (28) suspended on the clamping device (32, 34), so as not to falsify the weighing.

7. The device according to claim 6, characterised in that said means for limiting rocking comprise buffer surfaces (68) fixedly secured to the mobile assembly of the scales.

8. The device according to claim 6, characterised in that said means for limiting rocking comprise fixed surfaces (60) for dampening rocking, which are retractable during the weighing operation.

9. The device according to any one of the above-mentioned claims, characterised in that it comprises a tray (60) receiving the bag (28) released at the end of the weighing cycle, arranged underneath the bag and designed to be raised and lowered to limit or eliminate the height from which the bag can drop without interfering with the weighing.

10. The device according to any one of the above-mentioned claims, having selection buttons (70), notably of the type of goods contained in the bag, characterised in that actuation of said buttons is only possible when protection of said volume (10) is performed.

## Patentansprüche

1. Wiegevorrichtung zum Wiegen in Selbstbedienung von Waren, die sich in einer Tüte (28) befinden, welche nach dem Wiegen nicht mehr zugänglich ist, mit einer Greifvorrichtung (32, 34) des Randes (30) der Tüte, die mit dem beweglichen Teil (22,26) der Waage verbunden ist, wobei ein Volumen (10) den genannten beweglichen Teil (22, 26), die Greifvorrichtung (32, 34) und die daran hängende Tüte (28) einschliesst, und mit einer Folge von Vorgängen, welche das Wiegen, das Drucken des Wiegeetiketts (48) und das Verschliessen der aus Plastikmaterial bestehenden Tüte umfasst, dadurch gekennzeichnet, dass das Verschliessen der Plastiktüte durch Punktschweissung des Randes (30), der zwischen den Klemmbacken (32,34) der genannten Greifvorrichtung eingeklemmt wird, erfolgt, und dass die Punktschweissung des genannten eingeklemmten Randes gleichzeitig die Befestigung des Wiegeetiketts (48) durch Schweissen ausführt.

2. Vorrichtung gemäss Anspruch 1, dadurch gekennzeichnet, dass das Wiegeetikett einen Plastikstreifen aufweist, der zwischen einer (34) der Greifabacken (32, 34) und dem eingeklemmten Rand (30) der Tüte eingefügt ist.

3. Vorrichtung gemäss Anspruch 1 oder 2, dadurch gekennzeichnet, dass die Verschliessvorrichtung mehrere Spitzen (40) aufweist, die auf eine Temperatur erhitzt werden, die für ein oberflächliches Schmelzen des Plastikmaterials des Tütenrandes (30) ausreicht, dass die genannten Spitzen gleitend Löcher (38) durchdringen, die in einer (34) der genannten Klemmbacken (32, 34) angeordnet sind, und dass die genannen Spitzen transversal verschoben werden, um die verschiedenen Dicken und/oder übereinanderliegenden Schichten zu durchdringen, und um das Schmelzen des Plastikmaterials des Tütenrandes und des Etiketts zu bewirken.

4. Vorrichtung gemäss Anspruch 1, 2 oder 3, dadurch gekennzeichnet, dass das streifenförmige Etikett (48) ein Teil (62) aus Plastik aufweist, das auf den Tütenrand geschweisst wird, und ein Teil (64), das den Aufdruck von den Wiegeangaben (66) ermöglicht.

5. Vorrichtung gemäss irgendeinem der vorigen Ansprüche, dadurch gekennzeichnet, dass die stangenförmigen Verschliess-Spitzen (40) gleitbar in einer Klemmbacke (34) des Tütenrandes (30) angebracht sind, wobei die gegenüberliegende Klemmbacke (32) eine Beschichtung aus Polytetrafluoräthylen oder aus einem gleichwertigen Material aufweist, auf der die Spitzen (40) in Anschlag kommen.

6. Vorrichtung gemäss irgendeinem der vorigen Ansprüche, dadurch gekennzeichnet, dass sie Mittel (68) aufweist, zur Begrenzung der Schwingungen der an der Greifvorrichtung (32, 34) hängenden Tüte, um das Wiegeresultat nicht zu verfälschen.

7. Vorrichtung gemäss Anspruch 6, dadurch gekennzeichnet, dass die genannten Schwingungsbegrenzungsmittel Anschlagoberflächen (68) aufweisen, die mit dem beweglichen Teil der Waage verbunden sind.

8. Vorrichtung gemäss Anspruch 6, dadurch gekennzeichnet, dass die genannten Schwingungsbegrenzungsmittel feste Oberflächen (60) zum Dämpfen der Schwingung aufweisen, die während des Wiegevorgangs zurückgezogen werden können.

9. Vorrichtung gemäss irgendeinem der vorigen Ansprüche, dadurch gekennzeichnet, dass sie eine Schale (60) zur Aufnahme der am Ende des Wiegevorganges befreiten Tüte aufweist, die unter der Tüte angeordnet ist, und die erhöht oder gesenkt werden kann, um die Fallhöhe der Tüte zu begrenzen oder zu annullieren, ohne das Wiegen zu stören.

10. Vorrichtung gemäss irgendeinem der vorigen Ansprüche, mit Wahltasten (70) für die sich in der Tüte befindlichen Waren, dadurch gekennzeichnet, dass die Betätigung der genannten Tasten nur möglich ist, wenn der Schutz des genannten Volumens (10) gewährleistet ist.
